# EUROPÄISCHE PATENTSCHRIFT

(11) **EP 1 534 543 B1**
(45) Veröffentlichungstag und Bekanntmachung des Hinweises auf die Patenterteilung: **21.12.2005**
(21) Anmeldenummer: 03793456.9
(22) Anmeldetag: 13.08.2003
(51) Int. Cl.: B60C 27/10

(54) **GLEITSCHUTZKETTE**
ANTI-SKID CHAIN
CHAINE ANTIDERAPANTE

(30) Priorität: 05.09.2002 AT 13332002
(43) Veröffentlichungstag der Anmeldung: 01.06.2005
(73) Patentinhaber: PEWAG AUSTRIA GmbH, 8010 Graz (AT)
(72) Erfinder: PENGG, Ägyd, A-9220 Velden (AT)
(74) Vertreter: Patentanwaltskanzlei Matschnig
(86) Internationale Anmeldenummer: PCT/AT2003/000236
(87) Internationale Veröffentlichungsnummer: WO 2004/022364

(56) Entgegenhaltungen:
- EP-A- 1 024 035
- EP-A- 1 072 448
- EP-A- 1 174 292
- DE-U- 8 902 454

## Beschreibung

Die Erfindung betrifft eine Gleitschutzkette mit einem Laufnetz, welches zwischen einer in einem montierten Zustand an einer inneren Seitenflanke eines Reifens anliegenden inneren Halterung und einem in einem montierten Zustand im wesentlichen an einer äußeren Seitenflanke des Reifens anliegenden Seitenstrang verläuft, wobei die Gleüschutzkette an der Außenseite des Reifens durch zumindest einen mit zumindest einem Spannelement verbundenen Spannstrang gespannt ist, wobei der zumindest eine Spannstrang durch zumindest ein Umlenkelement um einen Winkel, der zumindest 90° beträgt, umgelenkt ist, wobei ein dem zumindest einen Spannelement abgewandter, umgelenkter Endbereich des zumindest einen Spannstrangs mit dem Seitenstrang und/ oder dem Laufnetz verbunden ist.

Bei Gleitschutzketten der eingangs genannten Art wird üblicherweise nach Montieren der inneren Halterung, beispielsweise eines ringförmigen Halteelements aus Draht, die Gleitschutzkette durch Spannen eines mit dem Seitenstrang verbundenen Spannstranges mittels eines sogenannten "Spartnschlosses" auf dem Reifen fixiert.

Eine derartige Spannvorrichtung bzw. Spannschloss ist beispielsweise aus der AT 408 635 der Anmelderin bekannt geworden.

Gleitschutzketten der eingangs genannten Art sind beispielsweise aus der DE 89 02 454 U sowie der EP 1174 292 A bekannt geworden. Diese Dokumente zeigen je eine Gleitschutzkette, welche zum Schließen und Spannen einen Spannstrang aufweist, der über ein zwischen einem Spannelement und einem Haken, mit welchem der Spannstrang an der Seitenhalterung befestigbar ist, angeordnetes Umlenkelement geführt ist.

Die EP 1 024 035 und die EP 1 072 448 A2 zeigen je eine Gleitschutzkette mit einem Spannstrang, der mittels eines Spannelementes gespannt werden kann, wobei der Spannstrang geradlinig und quer über eine Reifenflanke geführt ist.

Üblicherweise ist der an der äußeren Seitenflanke anliegende Seitenstrang als Kette ausgebildet. In diesem Fall wird für den hier verwendeten Begriff "Seitenstrang" üblicherweise die Bezeichnung "Seitenkette" verwendet.

Nachteilig an den bekannten Gleitschutzketten ist vor allem, dass es zu einem Verrutschen der montierten Kette kommen kann.

Es ist daher eine Aufgabe der Erfindung, den oben genannten Nachteil der bekannten Gleitschutzketten zu überwinden.

Diese Aufgabe wird mit einer Gleitschutzkette der eingangs genannten Art erfindungsgemäß dadurch gelöst, dass ein zwischen dem zumindest einen Spannelement und dem zumindest einen Umlenkelement verlaufender Abschnitt des Spannstrangs in zumindest einem mit dem Seitenstrang verbundenen Führungselement geführt ist.

Die erfindungsgemäße Lösung ermöglicht durch die Umlenkung der Spannkraft bzw. das zumindest eine Umlenkelement eine hohe und symmetrische Krafteinleitung in den Seitenstrang bzw. in das Laufnetz, wodurch sich die Fixierung der Gleitschutzkette an dem Reifen gegenüber bekannten Lösungen wesentlich verbessern lässt. Weiters kann durch die erfindungsgemäße Ausführungsform ein Lockern der Kette während der Fahrt sehr effizient verhindert werden.

In einer bevorzugten Ausführungsform der Erfindung kann der Spannstrang abschnittsweise als Kette und/oder abschnittsweise als Seil ausgebildet sein. Bei dieser Ausführungsform kann beispielsweise ein in das Spannelement führender Abschnitt des Spannstranges als Seil ausgeführt sein während ein mit der Seitenkette verbundener Abschnitt des Spannstranges als Kette ausgebildet sein kann. Die beiden unterschiedlichen Abschnitte des Spannstranges können über ein Verbindungselement - im einfachsten Fall beispielsweise einem Haken - miteinander verbunden sein.

Weiters kann der Spannstrang über ein Verbindungsglied mit dem Seitenstrang und dem Laufnetz verbunden sein.

Günstigerweise kann das Umlenkelement als Rolle ausgebildet sein.

Der Seitenstrang kann zumindest abschnittsweise als Kette, als Seil und/ oder als Drahtseil ausgebildet sein, wobei der Spannstrang und der Seitenstrang auch einstückig ausgebildet sein können bzw. der Seitenstrang in den Spannstrang übergeht.

Vorteilhafterweise kann zumindest ein Spannelement ein Verbindungselement aufweisen, welches mit einem korrespondierenden Verbindungselement zumindest eines Umlenkelements lösbar in Eingriff bringbar ist.

Weitere Vorteile, insbesondere eine einfache Montage der Gleitschutzkette, lassen sich dadurch erzielen, dass die innere Halterung in einem montierten Zustand im wesentlichen zu einem an einer inneren Seitenflanke eines Reifens anliegenden Ring geschlossen ist, wobei an beiden Enden der Haltevorrichtung je ein Verschlussteil angeordnet ist, und die beiden Verschlussteile miteinander verbindbar sind.

Die Erfindung samt weiteren Vorteilen ist im Folgenden anhand einiger nicht einschränkender Ausführungsbeispiele, welche in der Zeichnung näher erläutert sind, dargestellt, in dieser zeigen schematisch:
- Fig.1: eine Seitenansicht der Außenseite eines Reifen eines Kraftfahrzeuges mit einer erfindungsgemäßen Gleitschutzkette in einem montierten Zustand und
- Fig. 2: eine Seitenansicht der Innenseite des Reifens aus Fig. 1 mit einer erfindungsgemäßen Gleitschutzkette in einem montierten Zustand;
- Fig. 3: den Reifen aus Fig. 1 mit einer weiteren Variante einer erfindungsgemäßen Gleitschutzkette in einem montierten Zustand.

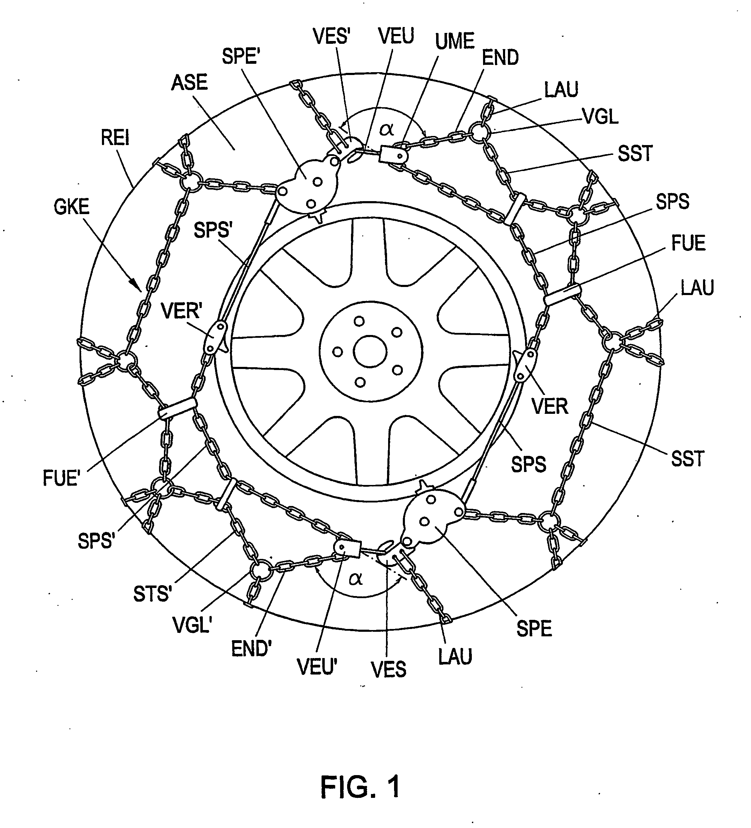

Gemäß Fig. 1 - 3 weist eine erfindungsgemäße Gleitschutzkette GKE ein Laufnetz LAU auf, welches zwischen einer in einem montierten Zustand an einer inneren Seitenflanke ISE eines Reifens REI anliegenden inneren Halterung HAL und einem in einem montierten Zustand im wesentlichen an einer äußeren Seitenflanke SEI des Reifens REI anliegenden Seitenstrang SST verläuft.

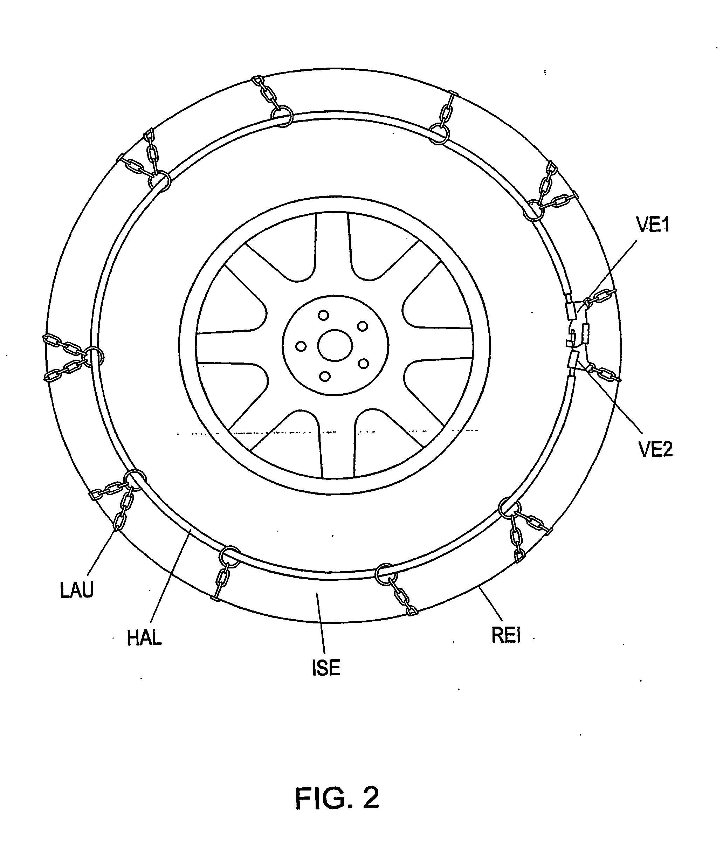

Die Haltevorrichtung HAL kann gemäß Fig. 2 je einen Verschlussteil VE1, VE2 an ihren freien Enden aufweisen. Durch Verbinden der beiden Verschlussteile VE1, VE2 kann die Haltevorrichtung HAL zu einem Ring geschlossen werden. In einem montierten Zustand liegt die Haltevorrichtung HAL an einer inneren, d. h. einem Fahrzeug zugewandten, Flanke ISE eines Reifens REI an. Die Haltevorrichtung HAL kann beispielsweise ein Drahtseil, ein federelastischer Bügel etc. sein. An der Haltevorrichtung HAL ist das aus einer Verbindung von einzelnen Kettensträngen bzw. -gliedern gebildetes Laufnetz LAU der Gleitschutzkette befestigt.

Die Gleitschutzkette kann gemäß Fig. 1 durch ein oder mehrere an der Außenseite ASE des Reifens REI angeordnete Spannelemente SPE, SPE', beispielsweise einem Spannschloss der eingangs zitierten Art, gespannt werden. Hierzu kann pro Spannelement SPE, SPE' je ein mit diesem verbundener Spannstrang SPS, SPS' vorgesehen sein.

Der Spannstrang SPS, SPS' ist erfindungsgemäß durch mindestens ein Umlenkelement UME, UME' geführt und um einen Winkel α, der mindestens 90 ° beträgt, umgelenkt. In der hier dargestellten Ausführungsform der Erfindung ist das Umlenkelement UME, UME', beispielsweise eine Rolle, mit einem Spannelement SPE, SPE', welches einem zweiten Spannstrang SPS, SPS' zugeordnet ist, verbunden. Das Umlenkelement UME, UME' kann aber auch mit dem Laufnetz LAU oder dem Seitenstrang SST derart verbunden sein, dass eine Umlenkung des Spannstrangs SPS um mindestens 90 ° gewährleistet ist.

Ein dem jeweiligen Spannelement SPE, SPE' abgewandter, umgelenkter Endbereich END, END' des von diesem Spannelement SPE, SPE' gespannten Spannstanges SPS, SPS' ist mit dem Seitenstrang STS und/oder dem Laufnetz LAU verbunden. Weiters ist ein zwischen dem Spannelement SPE, SPE' und dem Umlenkelement UME, UME', durch welches der von diesem Spannelement SPE, SPE' gespannte Spannstrang SPS, SPS' umgelenkt wird, verlaufender Abschnitt des Spannstrang SPE, SPE' in mindestens einem mit dem Seitenstrang SST verbundenen Führungselement FUE, FUE' geführt.

Weiters kann jedes Spannelement SPE, SPE' je ein Verbindungselement VES, VES', beispielsweise einen Haken, aufweisen, über welches sie jeweils mit einem korrespondierenden Verbindungselement VEU, VEU', beispielsweise eine Öse, des Umlenkelements UME, UME', durch welches der von dem jeweils anderen Spannelement SPE, SPE' gespannte Spannstrang SPS, SPS' umgelenkt wird, lösbar in Eingriff bringbar ist. Mit den Haken bzw. Verbindungselementen VES, VES' der Spannelemente SPE, SPE' kann jeweils ein Kettenstrang des Laufnetzes LAU verbunden sein.

Auf diese Weise lässt sich eine optimale Krafteinleitung in den Seitenstrang SST bzw. die Seitenkette erreichen wodurch eine sehr gute Fixierung und Spannung der Gleitschutzkette GKE auf dem Reifen REI gewährleistet werden kann.

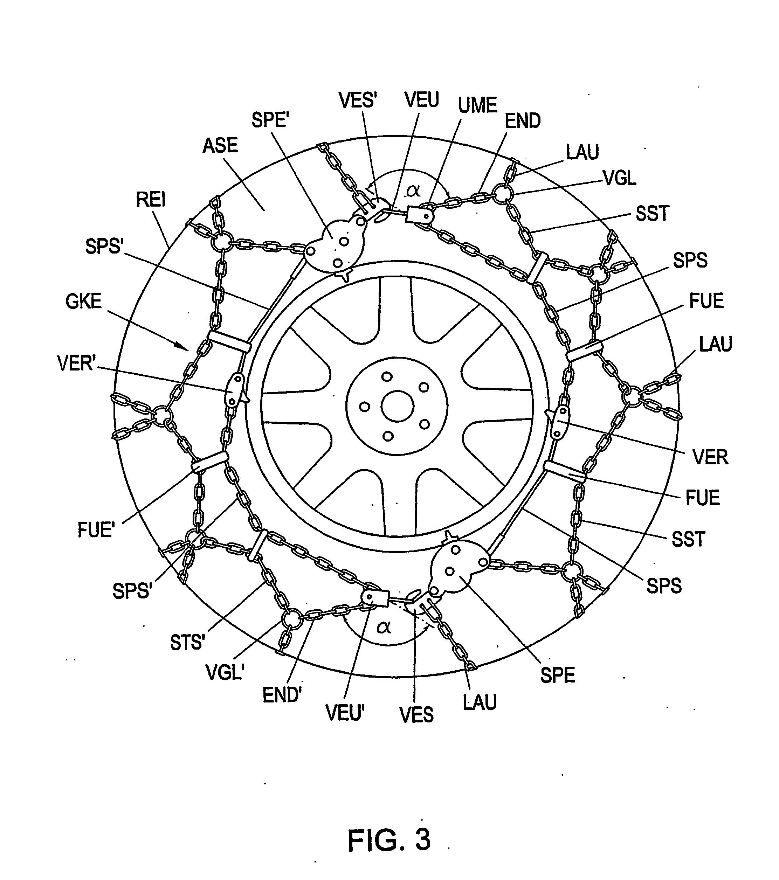

Prinzipiell kann die erfindungsgemäße Lösung auch mit einem einzigen Spannstrang SPS, SPS' und einem einzigen Spannschloss SPE, SPE' realisiert werden. Hierbei kann beispielsweise der in Fig.1 und 3 als SPS' Spannstrang bezeichnete Spannstrang durch die Führungsösen FUE bis zu dem als UME bezeichneten Umlenkelement geführt und von diesem umgelenkt werden, wobei der umgelenkte Endbereich END' des Spanstranges SPS' mit dem Laufnetz LAU bzw. dem Seitenstrang STS verbunden ist, beispielsweise über das Verbindungselement VGL. Das Umlenkelement UME kann bei der soeben beschriebenen Variante der Erfindung mit dem Spannelement SPE' verbunden sein.

Wie aus Fig. 1 zu entnehmen ist kann der Spannstrang SPS, SPS' abschnittsweise als Seil, beispielsweise als Drahtseil oder synthetisches Seil, ausgeführt sein, wobei ein weiterer Abschnitt, im Folgenden als Spannkette bezeichnet - als Kette ausgebildet sein kann. Die Spannkette und der seilförmige Abschnitt des Spannstranges SPS, SPS' können über ein Verbindungselement VER, VER' - beispielsweise einen Haken - miteinander verbunden sein. Die Spannkette ist in der hier dargestellte Ausführungsform über die Führungsösen FUE, welche an der Seitenkette angeordnet sind, der hier ebenfalls als Kette ausgebildet ist, geführt sein. Nach dem Umlenkelement UME, UME' - von dem Spannelement SPE, SPE' aus gesehen - kann der Spannstrang SPS, SPS' mit dem Seitenstrang STS bzw. mit dem Laufnetz LAU über ein Verbindungsglied VGL, VGL', beispielsweise einen Ring oder einen Haken, verbunden sein. Die einzelnen Spannstränge SPS, SPS' bzw. Spannketten können aber auch direkt, d. h. ohne jeweils zwischengeschaltetes Verbindungsglied VGL, VGL' in den Seitenstrang STS übergehen bzw. einstückig mit diesem ausgebildet sein.

Bei einer einstückigen Ausbildung des Spannstrangs SPS, SPS' und des Seitenstrangs STS kann der Seitenstrang in Ringen verschiebbar geführt sein, welche im wesentlichen den in Fig. 1 und 3 dargestellten ringförmigen Verbindungsgliedern VGL, VGL' entsprechen können.

Der Seitenstrang STS und die Spannstränge SPS, SPS' bilden gemäß der Erfindung gemeinsam mit den Spannelementen SPE, SPE' und den Umlenkelementen UME, UME' ein zusammenwirkendes System, mit dem ein Verrutschen der Gleitschutzkette GKE auf dem Reifen REI verhindert werden kann.

Prinzipiell kann der Spannstrang SPS, SPS' auch durchgehend als synthetisches oder als Drahtseil ausgebildet sein, gleiches gilt für den Seitenstrang STS, der hier durchgehend als Kette dargestellt ist.

In der Variante nach Fig. 3 können die Führungsösen FUE so angeordnet sein, dass der Spannstrang SPS, SPS' in einem montierten Zustand ein annähernd regelmäßiges Polygon bildet. Auf diese Weise lässt sich verhindern, dass der Spannstrang mit einer Reifenfelge in Berührung kommt und diese beschädigt.

## Patentansprüche

1. Gleitschutzketie (GKE) mit einem Laufnetz (LAU), welches zwischen einer in einem montierten Zustand an einer inneren Seitenflanke (ISE) eines Reifens (REI) anliegenden inneren Halterung (HAL) und einem in einem montierten Zustand im wesentlichen an einer äußeren Seitenflanke (ASB) des Reifens (REI) anliegenden Seitenstrang (SST) verläuft, wobei die Gleitschutzkette an der Außenseite (AUS) des Reifens (REI) durch zumindest einen mit zumindest einem Spannschloss (SPE, SPE') verbundenen Spannstrang (SPS, SPS) gespannt ist, wobei der zumindest eine Spannstrang (SPS, SPS') durch zumindest ein Umlenkelement (UME, UME') um einen Winkel (α), der zumindest 90° beträgt, umgelenkt ist, wobei ein dem zumindest einen Spannschloss (SPE, SPE') abgewandter, umgelenkter. Endbereich (END, END') des zumindest einen Spannstrangs (SPS, SPS') mit dem Seitenstrang (STS) und/oder dem Laufnetz (LAU) verbunden ist, **dadurch gekennzeichnet, dass** ein zwischen dem zumindest einen Spannschloss (SPE, SPE') und dem zumindest einen Umlenkelement (UME) verlaufender Abschnitt des Spannstrangs (SPS, SPS') in zumindest einem mit dem Seitenstrang (SST) verbundenen Führungselement (FUE, FUE') geführt ist.

2. Gleitschutzkette nach Anspruch 1, **dadurch gekennzeichnet, dass** der Spannstrang (SPS, SPS') abschnittsweise als Kette ausgebildet ist.

3. Gleitschutzkette nach einem der Ansprüche 1 oder 2, **dadurch gekennzeichnet, dass** der Spannstrang (SPS, SPS') abschnittsweise als Seil ausgebildet ist.

4. Gleitschutzkette nach einem der Ansprüche 1 bis 3, **dadurch gekennzeichnet, dass** der Spannstrang (SPS, SPS') abschnittsweise als Drahtseil ausgebildet ist.

5. Gleitschutzkette nach einem der Ansprüche 1 bis 4, **dadurch gekennzeichnet, dass** der Spannstrang (SPS, SPS') über ein Verbindungsglied (VGL. VGL') mit dem Seitenstrang (SST) und dem Laufnetz (LAU) verbunden ist.

6. Gleitschutzkette nach einem der Ansprüche 1 bis 5, **dadurch gekennzeichnet, dass** das zumindest eine Umlenkelement (UME, UME') als Rolle ausgebildet ist.

7. Gleitschutzkette nach einem der Ansprüche 1 bis 6, **dadurch gekennzeichnet, dass** der Seitenstrang (STS) zumindest abschnittsweise als Kette ausgebildet ist

8. Gleitschutzkette nach einem der Ansprüche 1 bis 7, **dadurch gekennzeichnet, dass** der Seitenstrang (STS) zumindest abschnittsweise als Seil ausgebildet ist.

9. Gleftschutzkette nach einem der Ansprüche 1 bis 8, **dadurch gekennzeichnet, dass** der Seitenstrang (STS) zumindest abschnittsweise als Drahtseil ausgebildet ist.

10. Gleitschutzkette nach einem der Ansprüche 1 bis 9, **dadurch gekennzeichnet, dass** der zumindest eine Spannstrang (SPS, 5PS') und der Seitenstrang (SST) einstückig ausgebildet sind.

11. Gleitschutzkette nach einem der Ansprüche 1 bis 10, **dadurch gekennzeichnet, dass** zumindest ein Spannschloss (SPE, SPE') ein Verbindungselement (VES, VES') aufweist, welches mit einem korrespondierenden Verbindungselement (VEU, VEU') zumindest eines Umlenkelements (UME, UME') lösbar in Eingriff bringbar ist

12. Gleitschutzkette nach einem der Ansprüche 1 bis 11, **dadurch gekennzeichnet, dass** die innere Halterung (HAL) in einem montierten Zustand im wesentlichen zu einem an einer inneren Seitenflanke eines Reifens anliegenden Ring geschlossen ist, wobei an beiden Enden der Haltevorrichtung je ein Verschlussteil (VE1, VE2) angeordnet ist, und die beiden Verschlussteile (VE1, VE2) miteinander verbindbar sind.

## Claims

1. An anti-skid chain (GKE) comprising a continuous chain mesh (LAU), which extends between an inside retaining device (HAL), which, in a mounted state, bears against an inside cheek (ISE) of a tire (REI), and a side harness line (SST), which, in a mounted state, bears substantially against an outside cheek (ASE) of said tire (REI), said anti-skid chain being tensioned on the outside (AUS) of the tire (REI) by at least one tensioning line (SPS, SPS'), connected to at least one turnbuckle (SPE, SPE') and said at least one tensioning line (SPS, SPS') being reversed in direction by at least one deflection element (UME, UME') through an angle (α) of at least 90 °, whilst a direction-reversed end region (END, END'), remote from at least one turnbuckle (SPE, SPE'), of said at least one tensioning line (SPS, SPS') is connected to said side harness line (STS) and/or to said continuous chain mesh (LAU), **characterized in that** a section of the tensioning line (SPS, SPS') extending between said at least one turnbuckle (SPE, SPE') and said at least one deflection element (UME) is guided in at least one guide element (FUE, FUE') connected to said side harness line (SST).

2. An anti-skid chain as defined in claim 1, **characterized in that** said tensioning line (SPS, SPS') is in part in the form of a chain.

3. An anti-skid chain as defined in claim 1 or claim 2, **characterized in that** said tensioning line (SPS, SPS') is in part in the form of a rope.

4. An anti-skid chain as defined in any one of claims 1 to 3, **characterized in that** said tensioning line (SPS, SPS') is in part in the form of a wire rope.

5. An anti-skid chain as defined in any one of claims 1 to 4, **characterized in that** said tensioning line (SPS, SPS') is linked via a shackle (VGL, VGL') to said side harness line (SST) and to said continuous chain mesh (LAU).

6. An anti-skid chain as defined in any one of claims 1 to 5, **characterized in that** the at least one deflection element (UME, UMF') is in the form of a roller.

7. An anti-skid chain as defined in any one of claims 1 to 6, **characterized in that** said side harness line (STS) is at least in part in the form of a chain.

8. An anti-skid chain as defined in any one of claims 1 to 7, **characterized in that** said side harness line (STS) is at least in part in the form of a rope.

9. An anti-skid chain as defined in any one of claims 1 to 8, **characterized in that** said side harness line (STS) is at least in part in the form of a wire rope.

10. An anti-skid chain as defined in any one of claims 1 to 9, **characterized in that** the at least one tensioning line (SPS, SPS') and said side harness line (SST) are in the form of an integral unit.

11. An anti-skid chain as defined in any one of claims 1 to 10, **characterized in that** at least one turnbuckle (SPE, SPE') exhibits a connecting element (VES, VES'), which can be made to releasably engage a corresponding connecting element (VEU, VEU') of at least one deflection element (UME, UME').

12. An anti-skid chain as defined in any one of claims 1 to 11, **characterized in that** said inside retaining device (HAL) forms, in a mounted state, a substantially closed ring which bears against an inside cheek of a tire, and each of the two ends of said retaining device is provided with a closing member (VE1, VE2) and said two closing members (VE1, VE2) are capable of being interconnected.

## Revendications

1. Chaîne antidérapante (GKE) comprenant un réseau de roulement (LAU) qui s'étend entre un support (HAL) intérieur appliqué à l'état monté contre un flanc latéral intérieur (ISE) d'un pneu (REI) et une branche latérale (SST) appliquée à l'état monté pour l'essentiel contre un flanc latéral extérieur (ASE) du pneu (REI), la chaîne antidérapante étant tendue sur la face extérieure (AUS) du pneu (REI) par au moins une branche de tension (SPS, SPS') reliée à au moins une serrure de tension (SPE, SPE'), l'au moins une branche de tension (SPS, SPS') étant déviée par au moins un élément de déviation (UME, UME') d'un angle (α) d'au moins 90°, une portion d'extrémité (END, END') de l'au moins une branche de tension (SPS, SPS') déviée opposée à l'au moins une serrure de tension (SPE, SPE') étant reliée à la branche latérale (STS) et/ou au réseau de roulement (LAU),
**caractérisée en ce qu'**un segment de la branche de tension (SPS, SPS') s'étendant entre l'au moins une serrure de tension (SPE, SPE') et l'au moins un élément de déviation (UME) est guidé dans au moins un élément de guidage (FUE, FUE') relié à la branche latérale (SST).

2. Chaîne antidérapante selon la revendication 1,
**caractérisée en ce que** la branche de tension (SPS, SPS') présente par segments la forme d'une chaîne.

3. Chaîne antidérapante selon l'une quelconque des revendications 1 ou 2,
**caractérisée en ce que** la branche de tension (SPS, SPS') présente par segments la forme d'un câble.

4. Chaîne antidérapante selon l'une quelconque des revendications 1 à 3,
**caractérisée en ce que** la branche de tension (SPS, SPS') présente par segments la forme d'un câble métallique.

5. Chaîne antidérapante selon l'une quelconque des revendications 1 à 4,
**caractérisée en ce que** la branche de tension (SPS, SPS') est reliée par un organe de liaison (VGL, VGL') à la branche latérale (SST) et au réseau de roulement (LAU).

6. Chaîne antidérapante selon l'une quelconque des revendications 1 à 5,
**caractérisée en ce que** l'au moins un élément de déviation (UME, UME') présente la forme d'un galet.

7. Chaîne antidérapante selon l'une quelconque des revendications 1 à 6,
**caractérisée en ce que** la branche latérale (STS) présente, au moins par segments, la forme d'une chaîne.

8. Chaîne antidérapante selon l'une quelconque des revendications 1 à 7,
**caractérisée en ce que** la branche latérale (STS) présente, au moins par segments, la forme d'un câble.

9. Chaîne antidérapante selon l'une quelconque des revendications 1 à 8,
**caractérisée en ce que** la branche latérale (STS) présente, au moins par segments, la forme d'un câble métallique.

10. Chaîne antidérapante selon l'une quelconque des revendications 1 à 9,
**caractérisée en ce que** l'au moins une branche de tension (SPS, SPS') et la branche latérale (SST) sont formées d'un seul tenant.

11. Chaîne antidérapante selon l'une quelconque des revendications 1 à 10,
**caractérisée en ce qu'**au moins une serrure de tension (SPE, SPE') présente un élément de liaison (VES, VES') pouvant s'engager de manière amovible dans un élément de liaison (VEU, VEU') correspondant d'au moins un élément de déviation (UME, UME') .

12. Chaîne antidérapante selon l'une quelconque des revendications 1 à 11,
**caractérisée en ce qu'**à l'état monté, le support intérieur (HAL) est fermé pour former sensiblement un anneau appliqué contre un flanc latéral intérieur d'un pneu, un élément de fermeture (VE1, VE2) étant disposé aux deux extrémités du dispositif de support respectivement, les deux éléments de fermeture (VE1, VE2) pouvant être reliés l'un à l'autre.
